# FASCICULE DE BREVET EUROPEEN

(11) **EP 2 074 714 B1**
(45) Date de publication et mention de la délivrance du brevet: **17.02.2010**
(21) Numéro de dépôt: 07820111.8
(22) Date de dépôt: 11.09.2007
(51) Int. Cl.: H04B 7/185, H04B 7/155

(54) **RÉPÉTEUR TERRESTRE MULTI-ENTRÉES POUR UN SYSTÈME DE DIFFUSION DE CONTENUS**
TERRESTRISCHER REPEATER MIT MEHREREN EINGÄNGEN FÜR EIN INHALTSAUSTRAHLUNGSSYSTEM
MULTI-INPUT TERRESTRIAL REPEATER FOR A CONTENTS BROADCASTING SYSTEM

(30) Priorité: 22.09.2006 FR 0653905
(43) Date de publication de la demande: 01.07.2009
(73) Titulaire: Alcatel Lucent, 75008 Paris (FR)
(72) Inventeur: DUVAL, Régis, F-78590 Noisy Le Roi (FR); COHEN, Michel, F-75011 Paris (FR); BLINEAU, Joseph, F-31321 Pechabou (FR); LE FLOCH, Christian, 92140 Clamart (FR)
(74) Mandataire: Hédarchet, Stéphane
(86) Numéro de dépôt international: PCT/EP2007/059501
(87) Numéro de publication internationale: WO 2008/034737

(56) Documents cités:
- WO-A-01/67637
- FR-A1- 2 871 635
- US-A- 5 854 793
- US-B1- 6 876 623

## Description

L'invention concerne les systèmes de communication, et plus précisément la diffusion de contenus par de tels systèmes, via des répéteurs terrestres, à destination de terminaux de communication radio.

On entend ici par « système de communication » un système constitué d'au moins une partie d'un réseau satellitaire comprenant au moins un satellite de diffusion, éventuellement de type géostationnaire, et d'au moins une partie d'un réseau de répéteurs terrestres, implantés en des endroits connus et éventuellement couplés à (ou implantés dans) des stations de base d'un réseau d'accès radio d'un réseau de communication radio. Ces satellite(s) et répéteurs terrestres sont chargés, notamment, de diffuser des contenus destinés à des terminaux de communication radio. Cette diffusion peut se faire soit à la fois par le(s) satellite(s) et les répéteurs terrestres (qui sont alimentés par le(s) satellite(s), éventuellement différent(s) de celui (ceux) qui alimentent les terminaux de communication radio), ou par un réseau terrestre), ce qui requiert des terminaux de communication radio à récepteur hybride, soit seulement par les répéteurs (qui sont alimentés par le(s) satellite(s)).

Par ailleurs, on entend ici par « contenu » des ensembles volumineux de données définissant un programme de télévision ou de vidéo ou audio (radiophonique ou musical) ou de jeux ou multimédia ou encore un fichier informatique (ou « data »).

De plus, on entend ici par « terminal de communication radio » tout type d'équipement de communication (mobile ou portable) capable au moins de recevoir des contenus transmis par voie d'ondes (éventuellement par un satellite). Il pourra par exemple s'agir d'un téléphone mobile (ou cellulaire), d'un assistant personnel numérique (ou PDA), d'un équipement de réception radio de programmes de télévision, comme par exemple un baladeur ou un téléviseur portable, d'un équipement de réception radio de programmes vidéos ou musicaux, d'un ordinateur portable, ou d'un équipement radio embarqué dans un véhicule (voiture, camion, bus, train, et analogues).

Dans les systèmes de diffusion précités, les répéteurs terrestres reçoivent généralement d'une unique source les contenus qu'ils doivent ré-émettre (ou répéter) vers des terminaux (de communication) radio. Cette source est soit un satellite du réseau satellitaire du système de diffusion (dont font partie les répéteurs terrestres), soit un réseau terrestre. De ce fait, le répéteur terrestre ne peut répéter (ou ré-émettre) les signaux radio (qui représentent les contenus à diffuser) que de l'une des trois façons suivantes : réception et ré-émission dans la bande de fréquences utilisée par le satellite et les terminaux de communication radio (par exemple la bande S), réception dans la bande de fréquences utilisée par le satellite (par exemple la bande Ku ou Ka) et ré-émission dans la bande de fréquences de réception des terminaux de communication radio, et réception terrestre et ré-émission dans la bande de fréquences de réception des terminaux de communication radio.

Du fait de cette alimentation par une unique source, les répéteurs terrestres ne peuvent plus assurer leur fonction lorsque survient un problème entre la source des contenus et eux. En outre, la plupart des répéteurs terrestres ne font que répéter intégralement les contenus reçus, et donc ne peuvent pas insérer et/ou supprimer localement des contenus, par exemple dans le but de diffuser des contenus différents en fonction de la région dans laquelle ils son implantés

Voir FR-A-2 871 635 (Alcatel).

L'invention a donc pour but d'améliorer la situation.

Elle propose à cet effet un répéteur terrestre comprenant :
- des moyens d'interface chargés de recevoir un premier flux de données provenant d'un premier réseau de transmission de type satellitaire, un deuxième flux de données provenant d'un deuxième réseau de transmission, et un troisième flux de données provenant d'un troisième réseau de transmission de type terrestre, et de transformer les flux reçus en paquets de données,
- des premiers moyens de traitement chargés de sélectionner une partie au moins des paquets de données de l'un au moins des premier, deuxième et troisième flux reçus et de traiter chaque partie de flux sélectionnée afin de placer les paquets de données qu'elle comprend dans un format de diffusion choisi, et
- des seconds moyens de traitement chargés de combiner ensemble les parties de flux sélectionnées et traitées afin de constituer un ensemble de paquets à diffuser, puis de convertir cet ensemble en au moins un signal (analogique) radiofréquence (RF), et d'amplifier ce signal (analogique) RF en vue de sa diffusion par voie d'ondes vers au moins un terminal (de communication) radio.

Le répéteur terrestre selon l'invention peut comporter d'autres caractéristiques qui peuvent être prises séparément ou en combinaison, et notamment :
- ses premiers moyens de traitement peuvent comprendre des moyens d'aiguillage chargés de sélectionner une partie au moins des paquets de données délivrés par les moyens d'interface, et des moyens de modulation chargés d'appliquer une modulation choisie à chaque partie de flux sélectionnée afin de placer dans le format de diffusion choisi les paquets de données que comprend cette partie ;
   ➢ les moyens de modulation peuvent comprendre un ou plusieurs (par exemple trois) modulateurs associés respectivement à un ou plusieurs (par exemple trois) canaux de transmission adjacents, chaque modulateur étant agencé pour appliquer la modulation choisie à chaque partie de flux, sélectionnée et aiguillée vers lui par les moyens d'aiguillage, et destinée à être diffusée dans le canal qui lui est associé ;
      ■ dans ce cas, ses premiers moyens de traitement peuvent par exemple comprendre des moyens de synchronisation chargés de synchroniser le traitement d'une partie de flux par chaque modulateur avec le traitement de cette même partie de flux par le modulateur correspondant au sein d'autres répéteurs terrestres de même type, afin de constituer des réseaux mono-fréquence (ou SFN (pour « Single Frequency Network ») ;
         o il peut également comprendre des moyens de réception de signaux de navigation par satellites (par exemple de type GPS) chargés de déduire un temps de référence de signaux de navigation reçus. Dans ce cas, les moyens de synchronisation sont chargés d'effectuer leur synchronisation en fonction du temps de référence ;
- ses seconds moyens de traitement peuvent être chargés d'adjoindre un changement de fréquence à la conversion d'un ensemble de paquets en un signal radiofréquence ;
- ses seconds moyens de traitement peuvent comprendre, d'une première part, des moyens de combinaison chargés de combiner ensemble les parties de flux sélectionnées et traitées et de délivrer en sortie au moins deux ensembles de paquets identiques, d'une deuxième part, au moins deux convertisseurs numérique/analogique chargés chacun de convertir l'un des ensembles de paquets en un signal (analogique) radiofréquence, et d'une troisième part, au moins deux amplificateurs associés chacun à un secteur de transmission et à l'un des convertisseurs et chargés chacun d'amplifier l'un des signaux (analogiques) radiofréquences en vue de sa diffusion ;
- ses moyens d'interface et ses premiers moyens de traitement peuvent par exemple faire partie d'une même carte de traitement ;
- le réseau de transmission satellitaire peut par exemple être un réseau de diffusion ;
- le deuxième réseau de transmission peut par exemple être un réseau radio de diffusion de type terrestre et/ou satellitaire ;
- le troisième réseau de transmission peut par exemple être un réseau de transmission fixe terrestre ;
- il peut comprendre des moyens de transmission chargés, au moins, d'émettre les signaux (analogiques) radiofréquences délivrés par les seconds moyens de traitement ;
- il peut partager avec une station de base, appartenant à un réseau d'accès radio d'un réseau de communication radio, des moyens de transmission propres à diffuser les signaux (analogiques) radiofréquences délivrés par ses seconds moyens de traitement.

L'invention propose également une station de base, pour un réseau d'accès radio d'un réseau de communication radio, et comprenant i) des moyens de transmission radio chargés d'émettre des signaux radiofréquences destinés à des terminaux (de communication) radio, ii) un répéteur terrestre du type de celui présenté ci-avant et propre à délivrer des premiers signaux (analogiques) RF à diffuser, et iii) des moyens de multiplexage chargés de multiplexer en fréquence les premiers signaux (analogiques) RF et des seconds signaux (analogiques) RF reçus, afin de diffuser des multiplex fréquentiels vers les terminaux radio.

En variante, la station de base peut comprendre i) des moyens de transmission radio chargés d'émettre/recevoir des signaux (analogiques) radiofréquences destinés à/provenant de terminaux radio, et ii) des moyens de multiplexage chargés de multiplexer en fréquence des premiers signaux (analogiques) radiofréquence, délivrés par un répéteur terrestre du type de celui présenté ci-avant, et des seconds signaux (analogiques) radiofréquences reçus, afin de diffuser des multiplex fréquentiels vers les terminaux radio.

D'autres caractéristiques et avantages de l'invention apparaîtront à l'examen de la description détaillée ci-après, et des dessins annexés, sur lesquels :
- la figure 1 illustre de façon très schématique un exemple de système de diffusion (de type hybride) équipé d'un exemple de réalisation de répéteur terrestre selon l'invention,
- la figure 2 illustre de façon très schématique un premier exemple de réalisation d'un répéteur terrestre selon l'invention, et
- la figure 3 illustre de façon très schématique un exemple de station de base équipé d'un second exemple de réalisation de répéteur terrestre selon l'invention.

Les dessins annexés pourront non seulement servir à compléter l'invention, mais aussi contribuer à sa définition, le cas échéant.

L'invention a pour objet de permettre l'alimentation d'un répéteur terrestre par trois réseaux différents (un premier réseau de transmission satellitaire, un deuxième réseau de transmission terrestre et/ou satellitaire, et un troisième réseau de transmission terrestre).

Dans ce qui suit, on considère, à titre d'exemple illustratif et non limitatif, que le premier réseau de transmission satellitaire (R1) est un réseau de diffusion (par exemple de type DVB-S/S2), que le deuxième réseau de transmission (R2) est un réseau radio de diffusion terrestre (par exemple de type MPEG-TS), et le troisième réseau de transmission terrestre (R3) est un réseau IP (« Internet Protocol ») de transmission fixe (par exemple de type Ethernet).

Mais l'invention n'est pas limitée à ces exemples de réseau de transmission. Elle concerne en effet aussi bien les réseaux de transmission autorisant les communications de type bidirectionnel, que les réseaux de diffusion éventuellement radio (ou hertziens), satellitaires ou terrestres, autorisant les communications de type monodirectionnel (au moins), ainsi que toutes les combinaisons de ces deux types de réseau. Ainsi, elle concerne également les réseaux de type WiMAX, HF et tous les autres types de réseau radio.

Par ailleurs, on considère dans ce qui suit, à titre d'exemple non limitatif, que le répéteur terrestre (RT) est chargé de diffuser des signaux analogiques radiofréquences (RF) au format (ou standard) DVB-H (ou l'une quelconque de ses évolutions en préparation dans le groupe DVB-SSP), par exemple dans la bande S. Mais l'invention n'est pas limitée à ce type de format (ou standard) de diffusion. Elle concerne en effet n'importe quelle bande de fréquences de ré-émission, et notamment la bande L ou la bande UHF.

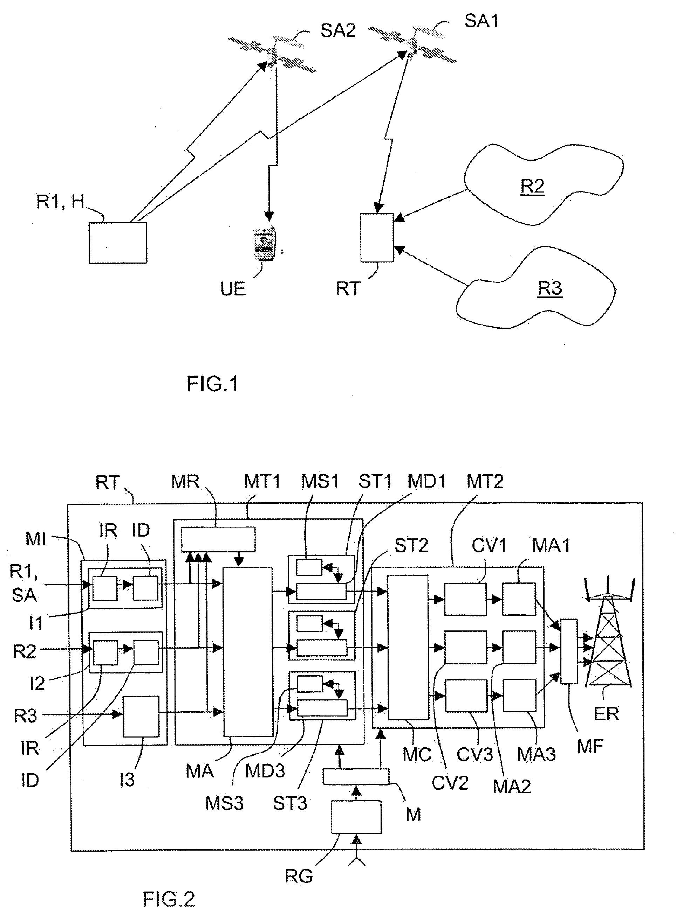

On se réfère tout d'abord à la figure 1 pour présenter un système de communication hybride permettant de mettre en oeuvre l'invention. On notera que l'invention concerne également les systèmes de communication non hybrides c'est-à-dire ceux dans lesquels les terminaux de communication radio ne reçoivent des données que par voie radio terrestre (et non pas satellitaire).

Comme cela est schématiquement illustré, le système (de communication) hybride comprend :
- au moins une partie d'un réseau satellitaire R1 (ici de type DVB-SSP), comprenant au moins un premier satellite de transmission SA1, éventuellement de type géostationnaire et chargé de diffuser des contenus reçus vers des répéteurs terrestres RT, au moins un second satellite de transmission SA2, éventuellement de type géostationnaire et chargé de diffuser des contenus reçus vers des terminaux de communication radio UE, et au moins une passerelle satellitaire H (ou « Hub ») chargée d'alimenter les satellites SA1 et SA2 en contenus (par exemple des programmes de télévision). On notera que l'on peut envisager qu'un même satellite diffuse les contenus reçus à la fois vers les répéteurs terrestres RT et les terminaux de communication radio UE,
- au moins une partie d'un réseau de répéteurs terrestres RT (ici un seul répéteur terrestre est matérialisé afin de ne pas surcharger la figure), implantés en des endroits connus. Comme on le verra plus loin, un répéteur terrestre RT peut être éventuellement couplé à (ou implantés dans) une station de base d'un réseau d'accès radio d'un réseau de communication radio. Mais cela n'est pas une obligation. Chaque répéteur terrestre RT est alimenté par les trois réseaux (sources de contenus) précités R1 à R3,
- des terminaux de communication radio UE, ci-après appelés terminaux radio, équipés, par exemple, d'un récepteur radio hybride afin de recevoir à la fois les signaux radio (ici DVB-SSP, par exemple avec une forme d'onde de type TDM) diffusés par le(s) second(s) satellite(s) SA2 et les signaux radio (ici DVB-SSP par exemple avec une forme d'onde de type OFDM) diffusés par les répéteurs terrestres RT. On notera que les terminaux radio UE peuvent être simplement équipés d'un récepteur radio terrestre classique lorsque le(s) satellite(s) n'est (ne sont) chargé(s) de transmettre des signaux (analogiques) radiofréquences qu'aux seuls répéteurs terrestres RT et non à la fois aux répéteurs terrestres RT et aux terminaux radio UE (comme c'est le cas dans l'exemple illustré).

Les terminaux radio UE peuvent être portables ou mobiles. Dans ce qui suit, on considère, à titre d'exemple illustratif et non limitatif, qu'il s'agit de téléphones mobiles (ou cellulaires). Mais, il pourrait également s'agir d'assistants personnels numériques (ou PDAs), d'équipements de réception radio de programmes de télévision, comme par exemple des baladeurs (de télévision (ou TV)) ou des téléviseurs portables, d'équipements de réception radio de programmes vidéos ou musicaux, d'ordinateurs portables, ou d'équipements radio embarqués dans un véhicule (voiture, camion, bus, train, et analogues).

Il est important de noter que l'invention concerne la diffusion de tout type de contenu, c'est-à-dire d'ensembles volumineux de données définissant un programme de télévision ou de vidéo ou audio (radiophonique ou musical) ou de jeux ou multimédia ou encore un fichier informatique (ou « data »).

Comme cela est schématiquement et fonctionnellement illustré sur la figure 2, un répéteur terrestre RT selon l'invention comprend au moins des moyens d'interface MI, des premiers moyens de traitement MT1 et des seconds moyens de traitement MT2 couplés les uns aux autres.

Bien que cela n'apparaisse pas sur la figure 2, une partie au moins des moyens d'interface MI et les premiers moyens de traitement MT1 peuvent faire partie d'une même carte de traitement.

Les moyens d'interface MI définissent trois entrées du répéteur terrestre RT, qui sont respectivement alimentées par un premier flux de données (sous forme de signaux radiofréquences (ici de type DVB-SSP)) transmis par le premier satellite SA1 du réseau satellitaire R1, un deuxième flux de données (sous forme de signaux numériques (ici de type MPEG-TS)) provenant du réseau de diffusion terrestre ou satellitaire R2, et un troisième flux de données (sous forme de signaux numériques (représentatifs ici de paquets IP)) provenant du réseau terrestre R3.

Ces moyens d'interface MI sont chargés de transformer les flux reçus en paquets de données, par exemple au format MPEG-TS. Ils comprennent à cet effet trois modules d'interface li (i = 1 à 3) dédiés chacun à l'un des trois flux.

Le premier module d'interface 11 comprend par exemple un ensemble d'équipements IR comprenant une antenne de réception satellitaire, un amplificateur, par exemple à faible bruit (ou LNA (pour « Low Noise Amplifier »)), pour amplifier les signaux analogiques RF reçus, un convertisseur de fréquence chargé de convertir les signaux analogiques RF amplifiés dans une bande de fréquences dite intermédiaire (ou IF), et un tuner chargé de convertir ces signaux IF en signaux numériques en bande de base.

Le premier module d'interface 11 comprend surtout un module de démodulation ID chargé au moins de démoduler les signaux numériques (en bande de base) afin de délivrer des paquets de données selon un format choisi, ici MPEG-TS. La démodulation est par exemple de type QPSK ou 8PSK.

Il est important de noter que l'ensemble d'équipements IR et le module de démodulation ID constituent une terminaison de réseau qui peut être intégralement ou partiellement externe à l'éventuelle carte de traitement.

On notera que le module de démodulation ID peut être également et éventuellement chargé d'appliquer un traitement complémentaire dit de « descrambling » lorsque les signaux transmis par le premier satellite SA1 du premier réseau R1 ont fait l'objet d'un étalement de spectre au moyen de codes de brouillage (ou « scrambling codes »). Ce traitement complémentaire agit seulement sur la partie utile (ou « payload ») des paquets MPEG-TS (soit 188 octets par paquet).

Le module de démodulation ID du premier module d'interface 11 délivre donc sur sa sortie ce que l'on appelle généralement des blocs de programme (ou contenu) utiles, typiquement des paquets IP (de type MPE (pour « Multi Protocol Encapsulator »)) encapsulés dans des paquets de type TS (pour « Transport Stream » - flux de transport) contenant des blocs de programme (ou contenu).

Le deuxième module d'interface 12 comprend par exemple un ensemble d'équipements IR comprenant une antenne de réception radio terrestre ou satellite, un amplificateur, par exemple à faible bruit (ou LNA), pour amplifier les signaux analogiques reçus, un convertisseur de fréquence chargé de convertir les signaux analogiques amplifiés dans la bande de fréquences intermédiaires (IF), et un tuner chargé de convertir ces signaux IF en signaux numériques en bande de base.

Le deuxième module d'interface 12 peut également comprendre un module de démodulation ID chargé au moins de démoduler les signaux numériques afin de délivrer des paquets de données selon un format choisi, ici MPEG-TS.

Il est important de noter que l'ensemble d'équipements IR et le module de démodulation ID constituent une terminaison de réseau qui peut être intégralement ou partiellement externe à l'éventuelle carte de traitement.

On notera que le module de démodulation ID peut être également et éventuellement chargé d'appliquer un traitement complémentaire de descrambling (du type précité) lorsque les signaux transmis par le deuxième réseau R2 ont fait l'objet d'un étalement de spectre au moyen de codes de brouillage.

Le module de démodulation ID du deuxième module d'interface 12 délivre donc sur sa sortie des blocs de programme (ou contenu) utiles, typiquement des paquets IP (de type MPE) encapsulés dans des paquets de type TS contenant des blocs de programme (ou contenu).

Il est important de noter que le deuxième module d'interface 12 peut ne pas comporter l'ensemble d'équipements IR et le module de démodulation, lorsqu'il reçoit directement des signaux au format MPEG-TS, par exemple sur une liaison de type DVB-ASI (pour « DVB-Asynchronous Serial Interface »). Dans ce cas, il constitue une simple interface, par exemple de type DVB-ASI, délivrant des paquets de type TS prêts à être diffusés ou des paquets de type TS contenant des portions de type MPE.

Le troisième module d'interface 13 comprend un convertisseur analogique/numérique chargé de convertir les signaux analogiques radiofréquences reçus du troisième réseau R3 (qui constituent des flux IP simples) en signaux numériques. Il agit sur les couches physique (PHY) et MAC (« Medium Access Control »).

Il peut également et éventuellement être chargé de mettre en oeuvre un protocole sécurisé de manière à authentifier la source des paquets IP et/ou à vérifier l'intégrité des données et/ou interdire une double transmission (fonction dite « anti-replay »). Par exemple, un traitement de correction d'erreur de type FEC peut permettre la correction des paquets, le recouvrement des paquets non reçus et le ré-ordonnancement des paquets reçus sur un flux IP simple.

Il peut également et éventuellement être chargé d'appliquer un traitement complémentaire de descrambling (du type précité) lorsque les signaux transmis par le troisième réseau R3 ont fait l'objet d'une protection au moyen de codes de brouillage.

Le troisième module d'interface 13 délivre donc sur sa sortie des blocs de programme (ou contenu) utiles, typiquement des paquets IP (de type MPE) encapsulés dans des paquets de type TS contenant des blocs de programme (ou contenu).

Les premiers moyens de traitement MT1 sont chargés de sélectionner une partie au moins des paquets de données issus de l'un au moins des premier, deuxième et troisième flux reçus et de traiter chaque partie de flux sélectionnée afin de placer les paquets de données qu'elle comprend dans un format de diffusion choisi (ici DVB-SSP).

Pour ce faire, les premiers moyens de traitement MT1 comprennent au moins un module d'aiguillage (ou « switch ») MA couplé à des moyens de modulation MDj (ici j = 1 à 3, à titre d'exemple non limitatif).

Le module d'aiguillage MA est chargé de sélectionner, en fonction d'une programmation choisie, une partie au moins des paquets de données (ici au format TS) qui sont délivrés par les moyens d'interface MI, et plus précisément par leurs trois modules d'interface 11 à 13, et de délivrer les parties de paquets (ou blocs) sélectionnées sur une ou plusieurs sorties. En d'autres termes, le module d'aiguillage MA route vers sa (ou certaines de ses) sortie(s) tout ou partie des paquets de données reçus sur certaines de ses entrées.

On notera qu'en présence de paquets encapsulés, le module d'aiguillage MA peut être également chargé de désencapsuler les paquets avant de les délivrer sur sa (ou certaines de ses) sortie(s).

Afin de permettre l'insertion et/ou l'extraction locale de contenus, le répéteur terrestre RT peut comporter, comme illustré sur la figure 2, un module d'insertion/extraction MR couplé aux sorties des moyens d'interface MI et au module d'aiguillage MA. Ce module d'insertion/extraction MR est plus précisément chargé d'effectuer la réorganisation et la signalisation des blocs (paquets) assemblés dans le but d'insérer ou extraire localement des blocs (de contenus) et d'adapter le débit des blocs entrants. L'insertion de blocs se fait par le module d'aiguillage MA.

Les moyens de modulation MDj sont chargés d'appliquer une modulation choisie à chaque partie de flux sélectionnée par le module d'aiguillage MA afin de placer dans le format de diffusion choisi (ici DVB-SSP) les paquets de données contenus dans cette partie.

Dans l'exemple non limitatif illustré sur la figure 2, les moyens de modulation MDj comprennent trois modulateurs MD1 à MD3 associés respectivement à trois canaux de transmission adjacents (par exemple de 5 MHz de bande passante chacun), conformément au standard régissant le format DVB-SSP en cours de définition.

Il est important de noter que le nombre de modulateurs MDj dépend notamment du format des canaux de transmission choisi (largeur de bande). Par conséquent, le répéteur terrestre peut ne comporter qu'un seul modulateur ou bien deux, voire plus de trois si nécessaire.

Chaque modulateur MDj est donc couplé à l'une des sorties du module d'aiguillage MA afin d'appliquer la modulation choisie (ici de type DVB-SSP) à chaque partie de flux qui a été sélectionnée et aiguillée (ou routée) vers lui par le module d'aiguillage MA, et qui est destinée à être transmise dans le canal qui lui est associé.

Chaque modulateur MDj peut être éventuellement adapté de manière à supporter un codage puissant et/ou un entrelacement temporel long.

Les différents modulateurs MDj travaillant tous (ici) dans une bande passante de 5 MHz ils utilisent de préférence une même fréquence de travail définie à partir d'une horloge locale.

On notera que les différents modulateurs MDj peuvent être éventuellement configurés de façons différentes avec des jeux de paramètres de configuration différents. Par ailleurs, chaque modulateur MDj peut être éventuellement activé ou désactivé individuellement.

Comme cela est illustré à titre d'exemple non limitatif sur la figure 2, chaque modulateur MDj peut être éventuellement couplé à un module de synchronisation MSj avec lequel il forme un module de sous-traitement STj. Ces modules de synchronisation MSj sont nécessaires pour assurer le fonctionnement de réseaux mono-fréquence (SFN) hybrides ou terrestres seuls.

Chaque module de synchronisation MSj (également appelé adaptateur SFN (« Single Frequency Network »)) est chargé de synchroniser le traitement de la partie de flux du modulateur MDj auquel il est associé avec le traitement de cette même partie de flux par le modulateur MDj correspondant au sein des autres répéteurs terrestres RT de même type. En d'autres termes, les modules de synchronisation MSj sont chargés d'ajuster les temps de stockage en mémoire tampon des paquets de données (ou blocs) issus des différents flux reçus afin que les modulateurs MDj des différents répéteurs terrestres RT présents dans une même zone diffusent les mêmes données (parties de contenus) en même temps et avec une même fréquence. L'ajustement des temps de stockage se fait juste avant la modulation grâce aux marquages temporels qui sont contenus dans les paquets MIP au format MPEG-TS et grâce à un signal de référence d'horloge (parfois appelé « 1 pps ») fourni par un module d'horloge MH.

Le module d'horloge MH génère tous les signaux d'horloge, et notamment ceux de référence, utiles au fonctionnement de certains éléments constituant le répéteur terrestre RT. Il définit ces signaux d'horloge à partir d'un temps de référence qui est fourni par un récepteur de signaux de navigation par satellites RG, par exemple de type GPS. Ce dernier (RD) est en effet chargé de déduire un temps de référence à partir de signaux de navigation qu'il reçoit.

On notera que le module d'insertion/extraction MR fonctionne compte tenu des contraintes temporelles imposées par les marquages temporels contenus dans les paquets MIP.

La sortie de chaque modulateur MDj délivre pour les seconds moyens de traitement MT2 des signaux numériques de préférence de type I/Q, c'est-à-dire en phase (1 pour « In-phase ») et en quadrature (Q), selon un débit constant en bande de base (« baseband »), sur une bande passante ici égale à 5 MHz, et destinés à l'un des trois canaux.

Les seconds moyens de traitement MT2 sont chargés de combiner ensemble les parties de flux (ou blocs de contenu) sélectionnées et traitées, qui constituent les contenus des trois canaux délivrés par les premiers moyens de traitement MT1, afin de constituer un ensemble de paquets à diffuser, puis de convertir cet ensemble en au moins un signal analogique radiofréquence, et d'amplifier ce signal analogique radiofréquence en vue de sa diffusion par voie d'ondes vers au moins un terminal radio UE.

Pour ce faire, les seconds moyens de traitement MT2 comprennent un module de combinaison MC, des moyens de conversion numérique/analogique CVk et des moyens d'amplification MAk, couplés les uns aux autres.

Le module de combinaison MC est chargé de combiner ensemble les contenus des trois canaux (qui ont été sélectionnés et traités (notamment modulés) par les premiers moyens de traitement MT1), afin de délivrer en sortie autant d'ensembles de paquets identiques qu'il y a de secteurs émetteurs au niveau de l'antenne d'émission/réception ER utilisée. Chaque ensemble présente ainsi une bande passante égale à 15 MHz (3x5 MHz) qui satisfait au format de diffusion DVB-SSP.

En d'autres termes, le module de combinaison MC regroupe les signaux numériques de type I/Q délivrés par les sorties des trois modulateurs MDj afin de constituer un ensemble de signaux numériques de type I/Q, et si l'antenne ER à plusieurs secteurs il duplique cet ensemble afin de délivrer en sortie un nombre d'ensembles égal au nombre de secteurs de l'antenne ER.

Dans l'exemple non limitatif illustré sur la figure 2, l'antenne ER dispose de trois secteurs d'émission, si bien que le module de combinaison MC délivre sur trois sorties trois ensembles de signaux numériques de type I/Q rigoureusement identiques. Mais, il pourrait ne délivrer qu'un seul ensemble, ou bien deux, voire plus de trois, selon le nombre de secteurs de l'antenne ER. On pourrait également utiliser un unique amplificateur suivi d'un diviseur chargé d'alimenter les différents secteurs d'antenne.

Les moyens de conversion numérique/analogique CVk comprennent un nombre de convertisseurs numérique/analogique CVk fonction du nombre de sorties du module de combinaison MC et donc du nombre de secteurs de l'antenne ER. Chaque convertisseur numérique/analogique CVk est chargé de convertir l'ensemble de signaux numériques de type I/Q (paquets), délivré par la sortie du module de combinaison MC à laquelle il est couplé, en un signal analogique radiofréquence.

Préférentiellement, chaque convertisseur numérique/analogique CVk est également chargé de changer la fréquence des signaux d'entrée I et Q afin de la convertir vers la fréquence centrale de diffusion (ici 2,1775 GHz).

Les moyens d'amplification MAk comprennent un nombre d'amplificateurs MAk fonction du nombre de sorties du module de combinaison MC et donc du nombre de secteurs émetteurs de l'antenne ER. Chaque amplificateur MAk est chargé d'amplifier le signal analogique radiofréquence qui est délivré par la sortie du convertisseur numérique/analogique CVk à laquelle il est couplé, en vue de sa diffusion par l'un des secteurs de l'antenne ER.

Le répéteur terrestre RT peut comprendre, comme illustré, un module de filtrage MF placé en sortie des amplificateurs MAk et chargé d'alimenter les différents secteurs de l'antenne ER en signaux analogiques radiofréquences amplifiés et filtrés correspondant exactement au format de diffusion choisi (ici DBV-SSP - bande passante de 15 MHz (voire 30 MHz dans certains cas) et fréquence centrale de diffusion de 2,17 à 2,2 GHz).

Dans l'exemple non limitatif illustré sur la figure 2, l'antenne ER fait partie du répéteur terrestre RT. Mais, cela n'est pas une obligation. En effet, dans une première variante (non illustrée), le répéteur terrestre RT peut utiliser l'antenne ER d'une station de base SB (par exemple un Node B) appartenant à un réseau d'accès radio d'un réseau de communication radio (par exemple un réseau UMTS). Dans ce cas, la station de base SB et le répéteur terrestre partagent la même antenne ER.

Dans une deuxième variante (non illustrée), le répéteur terrestre RT alimente une station de base SB (par exemple un Node B), appartenant à un réseau d'accès radio d'un réseau de communication radio (par exemple un réseau UMTS), en premiers signaux analogiques radiofréquences prêts à être diffusés, et cette station de base SB comprend un module de multiplexage MM chargé de multiplexer en fréquence les premiers signaux analogiques radiofréquences délivrés par le répéteur terrestre RT et des seconds signaux analogiques radiofréquences (par exemple de type UMTS) qu'elle a elle-même produit en interne de façon classique. Le module de multiplexage MM délivre alors à l'antenne ER des multiplex fréquentiels afin qu'elle les diffusent vers les terminaux radio UE.

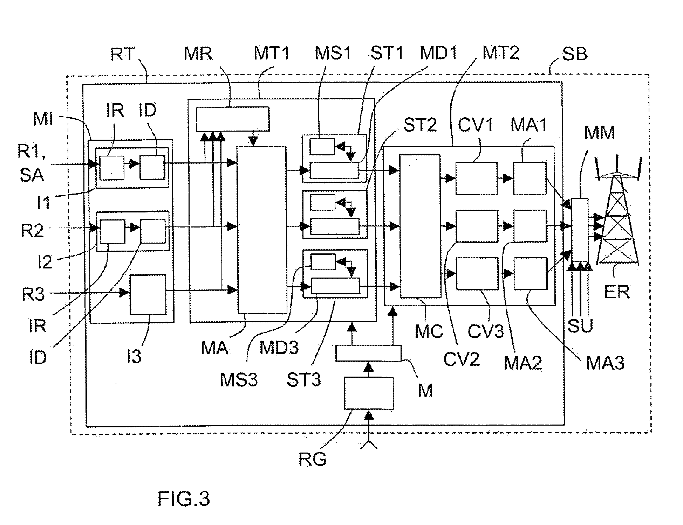

Dans une troisième variante illustrée sur la figure 3, le répéteur terrestre RT fait partie d'une station de base SB (par exemple un Node B) appartenant à un réseau d'accès radio d'un réseau de communication radio (par exemple un réseau UMTS). Cette station de base SB comprend alors un module de multiplexage MM (incluant de préférence le module de filtrage MF présenté ci-avant) chargé de multiplexer en fréquence les premiers signaux analogiques RF délivrés par son répéteur terrestre RT et des seconds signaux analogiques RF SU (par exemple de type UMTS) qu'elle a elle-même produit en interne de façon classique. Le module de multiplexage MM délivre alors à l'antenne ER des multiplex fréquentiels afin qu'elle les diffusent vers les terminaux radio UE.

Bien que cela n'apparaisse pas sur les différentes figures, chaque répéteur terrestre RT comprend des moyens de contrôle chargés de contrôler les fonctionnements respectifs des différents éléments qui le constituent.

Il est important de noter que les exemples de répéteurs terrestres décrits ci-avant sont destinés à la diffusion de contenus vers des terminaux radio UE. Ils présentent de ce fait un fonctionnement monodirectionnel descendant (des réseaux R1 à R3) vers les terminaux radio UE. Mais, les répéteurs terrestres peuvent être également utilisés dans le cadre de transmissions bidirectionnelles, moyennant les adaptations nécessaires.

Les répéteurs terrestres selon l'invention présentent plusieurs avantages, parmi lesquels :
- une grande souplesse d'utilisation,
- la possibilité de démarrer des services spécifiques dans certaines zones où certains accès n'existent pas,
- l'insertion/extraction locale de contenus,
- une redondance de sources de contenus particulièrement utile en cas d'indisponibilité de l'une ou de deux d'entre elles.

L'invention ne se limite pas aux modes de réalisation de répéteur terrestre et de station de base décrits ci-avant, seulement à titre d'exemple, mais elle englobe toutes les variantes que pourra envisager l'homme de l'art dans le cadre des revendications ci-après.

## Revendications

1. Répéteur terrestre (RT), **caractérisé en ce qu'**il comprend i) des moyens d'interface (MI) agencés pour recevoir un premier flux de données provenant d'un premier réseau de transmission de type satellitaire (R1), un deuxième flux de données provenant d'un deuxième réseau de transmission (R2), et un troisième flux de données provenant d'un troisième réseau de transmission de type terrestre (R3), et pour transformer lesdits flux reçus en paquets de données, ii) des premiers moyens de traitement (MT1) agencés pour sélectionner une partie au moins des paquets de données de l'un au moins desdits premier, deuxième et troisième flux reçus et pour traiter chaque partie de flux sélectionnée afin de placer les paquets de données qu'elle comprend dans un format de diffusion choisi, et iii) des seconds moyens de traitement (MT2) agencés pour combiner ensemble les parties de flux sélectionnées et traitées de manière à constituer un ensemble de paquets à diffuser, puis pour convertir ledit ensemble en au moins un signal radiofréquence, et pour amplifier ledit signal radiofréquence en vue de sa diffusion par voie d'ondes vers au moins un terminal de communication radio (UE).

2. Répéteur selon la revendication 1, **caractérisé en ce que** lesdits premiers moyens de traitement (MT1) comprennent des moyens d'aiguillage (MA) agencés pour sélectionner une partie au moins des paquets de données délivrés par lesdits moyens d'interface (MI), et des moyens de modulation (MDj) agencés pour appliquer une modulation choisie à chaque partie de flux sélectionnée afin de placer dans ledit format de diffusion choisi les paquets de données que comprend cette partie.

3. Répéteur selon la revendication 2, **caractérisé en ce que** lesdits moyens de modulation (MDj) comprennent un ou plusieurs modulateurs associés respectivement à un ou plusieurs canaux de transmission adjacents, chaque modulateur (MDj) étant agencé pour appliquer ladite modulation choisie à chaque partie de flux, sélectionnée et aiguillée vers lui par lesdits moyens d'aiguillage (MA), et destinée à être diffusée dans le canal qui lui est associé.

4. Répéteur selon la revendication 3, **caractérisé en ce que** lesdits premiers moyens de traitement (MT1) comprennent des moyens de synchronisation (MS) agencés pour synchroniser le traitement d'une partie de flux par chaque modulateur (MDj) avec le traitement de cette même partie de flux par le modulateur (MDj) correspondant au sein d'autres répéteurs terrestres (RT) de même type.

5. Répéteur selon la revendication 4, **caractérisé en ce qu'**il comprend des moyens de réception de signaux de navigation par satellites (RG) agencés pour déduire un temps de référence à partir de signaux de navigation reçus, et **en ce que** lesdits moyens de synchronisation (MS) sont agencés pour effectuer leur synchronisation en fonction dudit temps de référence.

6. Répéteur selon l'une des revendications 1 à 5, **caractérisé en ce que** lesdits seconds moyens de traitement (MT2) sont agencés pour adjoindre un changement de fréquence à la conversion d'un ensemble de paquets en un signal radiofréquence.

7. Répéteur selon l'une des revendications 1 à 6, **caractérisé en ce que** lesdits seconds moyens de traitement (MT2) comprennent i) des moyens de combinaison (MC) agencés pour combiner ensemble lesdites parties de flux sélectionnées et traitées et délivrer en sortie au moins deux ensembles de paquets identiques, ii) au moins deux convertisseurs numérique/analogique (CVk) agencés chacun pour convertir l'un desdits ensembles de paquets en un signal radiofréquence, et iii) au moins deux amplificateurs (MAk) associés chacun à un secteur de transmission et à l'un desdits convertisseurs (CVk) et agencés chacun pour amplifier l'un desdits signaux radiofréquences en vue de sa diffusion.

8. Répéteur selon l'une des revendications 1 à 7, **caractérisé en ce que** lesdits moyens d'interface (MI) et lesdits premiers moyens de traitement (MT1) font partie d'une même carte de traitement.

9. Répéteur selon l'une des revendications 1 à 8, **caractérisé en ce que** ledit réseau de transmission satellitaire (R1) est un réseau de diffusion.

10. Répéteur selon l'une des revendications 1 à 9, **caractérisé en ce que** ledit deuxième réseau de transmission (R2) est un réseau radio de diffusion de type terrestre et/ou satellitaire.

11. Répéteur selon l'une des revendications 1 à 10, **caractérisé en ce que** ledit troisième réseau de transmission (R3) est un réseau de transmission fixe terrestre.

12. Répéteur selon l'une des revendications 1 à 11, **caractérisé en ce qu'**il comprend des moyens de transmission (ER) agencés au moins pour émettre lesdits signaux radiofréquences délivrés par lesdits seconds moyens de traitement (MT2).

13. Répéteur selon l'une des revendications 1 à 11, **caractérisé en ce qu'**il partage avec une station de base (SB), appartenant à un réseau d'accès radio d'un réseau de communication radio, des moyens de transmission (ER) propres à diffuser lesdits signaux radiofréquences délivrés par lesdits seconds moyens de traitement (MT2).

14. Station de base (SB) pour un réseau d'accès radio d'un réseau de communication radio, ladite station (SB) comprenant des moyens de transmission radio (ER) agencés pour émettre des signaux radiofréquences destinés à des terminaux de communication radio (UE), **caractérisé en ce qu'**il comprend en outre un répéteur terrestre (RT) selon l'une des revendications 1 à 11 et propre à délivrer des premiers signaux radiofréquences à diffuser, et des moyens de multiplexage (MM) agencés pour multiplexer en fréquence lesdits premiers signaux radiofréquences et des seconds signaux radiofréquences reçus afin de diffuser des multiplex fréquentiels vers lesdits terminaux de communication radio (UE).

15. Station de base (SB) pour un réseau d'accès radio d'un réseau de communication radio, ladite station (SB) comprenant des moyens de transmission radio (ER) agencés pour émettre/recevoir des signaux radiofréquences destinés à/provenant de terminaux de communication radio (UE), **caractérisé en ce qu'**il comprend en outre des moyens de multiplexage (MM) agencés pour multiplexer en fréquence des premiers signaux radiofréquences, délivrés par un répéteur terrestre (RT) selon l'une des revendications 1 à 11, et des seconds signaux radiofréquences reçus, afin de diffuser des multiplex fréquentiels vers lesdits terminaux de communication radio (UE).

## Claims

1. Terrestrial repeater (RT), **characterized in that** it comprises i) interface means (MI) adapted for receiving a first data stream originating from a first satellite type transmission network (R1) a second data stream originating from a second transmission network (R2), and a third data stream originating from a third terrestrial type transmission network (R3), and for transforming the received streams into data packets; ii) first processing means (MT1) adapted for selecting at least a portion of the data packets of at least one of said first, second, and third received streams, and for processing each selected stream portion so as to place the data packets it comprises into a chosen broadcasting format, and iii) second processing means (MT2) adapted for combining the selected and processed stream portions in order to constitute a set of packets to be broadcast, then for converting said set into at least one radiofrequency signal, and for amplifying said radiofrequency signal in order to radio broadcast it towards at least one radio communication terminal (UE).

2. Repeater according to Claim 1, **characterized in that** said first processing means (MT1) comprise switching means (MA) adapted for selecting at least a portion of the data packets delivered by the interface means (MI), and modulation means (MDj) adapted for applying a chosen modulation to each selected portion of the streams in order to format the data packets comprised in this portion into the chosen broadcast format.

3. Repeater according to Claim 2, **characterized in that** said modulation means (MDj) comprise one or more modulators respectively associated to one or more adjacent transmission channels, each modulator (MDj) being adapted for applying said chosen modulation to each portion of stream selected and switched towards it by the switching means, and intended for broadcast within the channel associated thereto.

4. Repeater according to Claim 3, **characterized in that** said first processing means (MT1) comprise synchronisation means (MS) adapted for synchronizing the processing of a portion of a stream by each modulator (MDj) with the processing of the same portion of the stream by the corresponding modulator (MDj) within other terrestrial repeaters (RT) of the same type.

5. Repeater according to Claim 4, **characterized in that** comprises means for receiving satellite navigation signal (RG) adapted for deducting a reference time from the received navigation signals, and **in that** said synchronization means (MS) are adapted for using said reference time for their synchronization.

6. Repeater according to one of claims 1 to 5, **characterized in that** said second processing means (MT2) are adapted for adding a frequency change to the conversion of a set of packets in a radiofrequency signal.

7. Repeater according to one of claims 1 to 6, **characterized in that** said second processing means (MT2) comprise i), combination means (MC) adapted for combining together said selected and processed portions of the stream and for delivering, as an output, at least to sets of identical packets; ii) at least two digital-analog converters (CVk), each adapted for converting one of said sets of packets into a radiofrequency signal; and iii) at least two amplifiers (MAk), each associated to a transmission sector and to one of said converters (CVk), and each adapted for amplifying one of said radiofrequency signals with a view to its being broadcast.

8. Repeater according to one of claims 1 to 7, **characterized in that** the interface means (MI) and said first processing means (MT1) are part of one and the same processing board.

9. Repeater according to one of claims 1 to 8, **characterized in that** said satellite transmission network (R1) is a broadcasting network.

10. Repeater according to one of claims 1 to 9, **characterized in that** said second transmission network (R2) is a terrestrial and/or satellite radio broadcasting network.

11. Repeater according to one of claims 1 to 10, **characterized in that** said third transmission network (R3) is a fixed terrestrial transmission network.

12. Repeater according to one of claims 1 to 11, **characterized in that** it comprises transmission means (ER) adapted at least for transmitting staid radiofrequency signals delivered by said second processing means (MT2).

13. Repeater according to one of claims 1 to 11, **characterized in that** it shares, with a base station (SB) in a radio access network of a radio communication network, transmission means (ER) adapted for broadcasting said radiofrequency signals delivered by said second processing means (MT2).

14. Base station (SB) for a radio access network of a radio communication network, said station (SB) comprising radio transmission means (ER) adapted for transmitting radiofrequency signals intended for radio communication terminals (UE), **characterized in that** it additional comprises a terrestrial repeater (RT) in accordance with one of claims 1 to 11 and adapted for delivering first radiofrequency signals to be broadcast, and frequency multiplexing means (MM) adapted for frequency multiplexing said first radiofrequency signals and second radiofrequency signals received in order to broadcast frequency multiplexes towards the radio communication terminals (UE).

15. Base station (SB) for a radio access network of a radio communication network, said station (SB) comprising radio transmission means (ER) adapted for transmitting/receiving radiofrequency signals intended for / transmitted by radio communication terminals (UE), **characterized in that** it additional comprises frequency multiplexing means (MM) adapted for frequency multiplexing first radiofrequency signals delivered by terrestrial repeater (RT) in accordance with one of claims 1 to 11 and second radiofrequency signals received in order to broadcast frequency multiplexes towards said radio communication terminals (UE).

## Patentansprüche

1. Terrestrischer Zwischenverstärker (RT), **dadurch gekennzeichnet, dass** er umfasst: i) Schnittstellenmittel (MI), welche dazu ausgelegt sind, einen ersten Datenfluss von einem ersten Übertragungsnetzwerk vom Typ satellittengestütztes Netzwerk (R1), einen zweiten Datenfluss von einem zweiten Übertragungsnetzwerk (R2) und einen dritten Datenfluss von einem dritten Übertragungsnetzwerk vom Typ terrestrisches Netzwerk (R3) zu empfangen und die empfangenen Datenflüsse in Datenpakete umzuwandeln; ii) erste Verarbeitungsmittel (MT1), welche dazu ausgelegt sind, zumindest einen Teil der Datenpakete aus zumindest einem der besagten empfangen ersten, zweiten und dritten Datenflüsse auszuwählen und jeden Teil des ausgewählten Datenflusses zu verarbeiten, um die darin enthaltenen Datenpakete in ein ausgewähltes Verbreitungsformat einzufügen, und iii) zweite Verarbeitungsmittel (MT2), welche dazu ausgelegt sind, die ausgewählten und verarbeiteten Teile der Datenflüsse zu kombinieren, um eine Gruppe von zu übertragenden Datenpaketen zu bilden, diese besagte Gruppe in mindestens ein Funkfrequenzsignal umzuwandeln und das besagte Funkfrequenzsignal für dessen Übertragung über Wellen an mindestens ein Funkkommunikationsendgerät (UE) zu verstärken.

2. Zwischenverstärker nach Anspruch 1, **dadurch gekennzeichnet, dass** die besagten ersten Verarbeitungsmittel (MT1) Leitmittel (MA), welche dazu ausgelegt sind, zumindest einen Teil der von den besagten Schnittstellenmitteln (MI) gelieferten Datenpakete auszuwählen, sowie Modulationsmittel (MDj), welche dazu ausgelegt sind, an jeden Teil des ausgewählten Datenflusses eine ausgewählte Modulation anzulegen, um die in diesem Teil enthaltenen Datenpakete in das besagte ausgewählte Verbreitungsformal einzufügen, umfassen.

3. Zwischenverstärker nach Anspruch 2, **dadurch gekennzeichnet, dass** die besagten Modulationsmittel (MDj) einen oder mehrere jeweils einem oder mehreren benachbarten Übertragungskanälen zugeordnete Modulatoren umfassen, wobei jeder Modulator (MDj) dazu ausgelegt ist, die besagte ausgewählte Modulation an jeden Teil des Datenflusses anzulegen, welcher von den besagten Leitmitteln (MA) ausgewählt und an ihn geleitet wurde und dazu bestimmt ist, in dem ihm zugeordneten Kanal verbreitet zu werden,

4. Zwischenverstärker nach Anspruch 3, **dadurch gekennzeichnet, dass** die besagten ersten Verarbeitungsmittel (MT1) Synchronisationsmittel (MS) umfassen, welche dazu auslegt sind, die Verarbeitung eines Teils des Datenflusses durch jeden Modulator (MDj) mit der Verarbeitung dieses selben Teils des Datenflusses durch den entsprechenden Modulator (MDj) innerhalb von anderen terrestrischen Zwischenverstärkern (RT) gleichen Typs zu synchronisieren.

5. Zwischenverstärker nach Anspruch 4, **dadurch gekennzeichnet, dass** er Mittel zum Empfangen von Satellitennavigationssignalelen (RG) umfasst, welche dazu ausgelegt sind, von den empfangenen Navigationssignalen eine Referenzzeit abzuleiten, und dass die besagten Synchronisationsmittel (MS) dazu ausgelegt sind, deren Synchronisation gemäß der besagten Referenzzeit auszuführen.

6. Zwischenverstärker nach einem der Ansprüche 1 bis 5, **dadurch gekennzeichnet, dass** die besagten zweiten Verarbeitungsmittel (MT2) dazu ausgelegt sind, eine Frequenzänderung zu der Umwandlung einer Gruppe von Datenpaketen in ein Funkfrequenzsignal hinzuzufügen,

7. Zwischenverstärker nach einem der Ansprüche 1 bis 6, **dadurch gekennzeichnet, dass** die besagten zweiten Verarbeitungsmittel (MT2) umfassen: 1) Kombinationsmittel (MC), welche dazu ausgelegt sind, die besagten ausgewählten und verarbeiteten Teile des Datenflusses zu kombinieren und am Ausgang mindestens zwei Gruppen von identischen Datenpaketen zu liefern, ii) mindestens zwei Digital-Analog-Wandler (CVk), von denen ein jeder dazu ausgelegt ist, eine der besagten Gruppen von Datenpaketen in ein Funkfrrequenzsignal umzuwandeln, und iii) mindestens zwei Verstärker (MAk), welche jeweils einem Übertragungsbereich und einem der besagten Wandler (CVK) zugeordnet und dazu ausgelegt sind, eines der besagten Funkfrequenzsignale für dessen Verbreitung zu verstärken.

8. Zwischenverstärker nach einem der Ansprüche 1 bis 7, **dadurch gekennzeichnet, dass** die besagten Schnittstellenmittel (M1) und die besagten ersten Verarbeitungsmittel (MT1) einer selben Verarbeitungsplatine angehören.

9. Zwischenverstärker nach einem der Ansprüche 1 bis 8, **dadurch gekennzeichnet, dass** das besagte satellitengestützte Übertragungsnetzwerk (R1) ein Diffusionsnetzwerk ist.

10. Zwischenverstärker nach einem der Ansprüche 1 bis 9, **dadurch gekennzeichnet, dass** das besagte zweite Übertragungsnetzwerk (R2) ein Funkübertragungsnetzwerk vom Typ terrestrisches und/oder satellitengestütztes Netzwerk ist.

11. Zwischenverstärker nach einem der Ansprüche 1 bis 10, **dadurch gekennzeichnet, dass** das besagte dritte Übertragungsnetzwerk (R3) ein festes terrestrisches Übertragungsnetzwerk ist.

12. Zwischenverstärker nach einem der Ansprüche 1 bis 11, **dadurch gekennzeichnet, dass** er Übertragungsmittel (ER) umfasst, welche zumindest dazu ausgelegt sind, die besagten von den besagten zweiten Verarbeitungsmitteln (MT2) gelieferten Funkfrequenzsignale auszusenden.

13. Zwischenverstärker nach einem der Ansprüche 1 bis 11, **dadurch gekennzeichnet, dass** er Übertragungsmittel (ER), welche geeignet sind, die besagten von den besagten zweiten Verarbeitungsmitteln (MT12) gelieferten Funkfrequenzsignale zu verbreiten, mit einer Basisstation (SB), welche einem Funkzugangsnetz eines Funkkommunikationsnetzwerks angehört, teilt.

14. Basisstation (SB) für ein Funkzugangsnetz eines Funkkommunikationsnetwerks, wobei die besagte Basisstation (SB) Funkübertragungsmittel (ER) umfasst, welche dazu aufgelegt sind, für Funkkommunikationsendgeräte (UE) bestimmte Funkfrequenzsignale auszusenden, **dadurch gekennzeichnet, dass** sie weiterhin einen terrestrischen Zwischenverstärker (RT) nach einem der Ansprüche 1 bis 11, welcher dazu ausgelegt ist, erste zu verbreitende Funkfrequenzsignale zu liefern, sowie Multiplexmittel (MM), welche dazu ausgelegt sind, die besagten ersten Funkfrequenzsignale und empfangene zweite Funkfrequenzsignale in der Frequenz zu multiplexen, um Frequenzmultiplexe an die besagten Funkkommunikationsendgeräte (UE) zu verbreiten, umfasst.

15. Basisstation (SB) für ein Funkzugangsnetz eines Funkkommunikationsnetzwerks, wobei die besagte Basisstation (SB) Funkübertragungsmittel (ER) umfasst, welche dazu ausgelegt sind, für Funkkommunikationsendgeräte (UE) bestimmte/von Funkkommunikatfonsendgeräten (UE) kommende Funkfrequenzsignale auszusenden/zu empfangen, **dadurch gekennzeichnet, dass** sie weiterhin Multiplexmittel (MM) umfasst, welche dazu ausgelegt sind, erste Funkfrequenzsignale, welche von einem Zwischenverstärker (RT) nach einem der Anspruche 1 bis 11 geliefert wurden, und empfangene zweite Funkfrequenzsignale in der Frequenz zu multiplexen, um Frequenzmultiplexe an die besagten Funkkommunikationsendgeräte (UE) zu verbreiten.
